# EUROPÄISCHE PATENTSCHRIFT

(11) **EP 0 826 118 B1**
(45) Veröffentlichungstag und Bekanntmachung des Hinweises auf die Patenterteilung: **24.03.1999**
(21) Anmeldenummer: 96916054.8
(22) Anmeldetag: 13.05.1996
(51) Int. Cl.: F16H 61/02, F16H 61/06

(54) **UNTER LAST SCHALTBARES WENDEGETRIEBE**
POWERSHIFT REVERSING TRANSMISSION
BOITE D'INVERSION COUPLABLE SOUS CHARGE

(30) Priorität: 16.05.1995 DE 19517888
(43) Veröffentlichungstag der Anmeldung: 04.03.1998
(73) Patentinhaber: ZF FRIEDRICHSHAFEN Aktiengesellschaft, 88038 Friedrichshafen (DE)
(72) Erfinder: HEILIG, Eduard, D-88048 Friedrichshafen (DE); LEGNER, Jürgen, D-88048 Friedrichshafen (DE); MANN, Egon, D-88045 Friedrichshafen (DE); EYMÜLLER, Helmut, D-88046 Friedrichshafen (DE)
(86) Internationale Anmeldenummer: EP9602041
(87) Internationale Veröffentlichungsnummer: WO9636824

(56) Entgegenhaltungen:
- EP-A- 0 327 812
- DE-A- 4 230 622

## Beschreibung

Die Erfindung betrifft ein unter Last schaltbares Wendegetriebe mit einem hydrodynamischen Drehmomentwandler, einer Ein- und Ausgangswelle, mindestens einer Vorgelegewelle und Zahnrädern, die einen Wendesatz bilden, sowie Schaltkupplungen mit Losrädern, die Betätigungseinrichtungen aufweisen und zur Richtungsschaltung wahlweise drehfest mit der Eingangs- oder Vorgelegewelle verbindbar sind. Derartige wendegetriebe sind hinlänglich bekannt.

Bei dem Getriebe der vorstehend geschilderten Gattung handelt es sich um ein Wendegetriebe, wie es insbesondere in Flurförderfahrzeugen, wie beispielsweise Staplern, eingesetzt wird. Darüber hinaus kann es sich aber auch um die Eingangs-Baugruppe eines mehrgängigen Wendegetriebes handeln, wie es insbesondere in Baumaschinen, wie zum Beispiel Radladern, Baggerladern usw., Verwendung findet.

Allgemein weisen Wendegetriebe der angesprochenen Gattung eine Eingangs- und in der Regel mehrere Vorgelegewellen auf. Auf diesen Vorgelegewellen sind Schaltkupplungen (sogenannte Richtungs- und Gangschaltkupplungen) mit Losrädern angeordnet, die zur Gang- und Richtungsschaltung wahlweise drehfest mit den Wellen verbindbar sind. Der Abtrieb erfolgt über einen Abtriebsrädersatz. Die Anzahl der Festräder ist abhängig von der Gangzahl des Getriebes.

Lastschaltbare Wendegetriebe in Vorgelegewellenbauweise zeichnen sich durch eine Reihe von Vorteilen aus. Deswegen werden derartige Getriebe bei vielen Nutzfahrzeugen eingesetzt. Diese Getriebe sollen kompakt bauen und komfortabel zu schalten sein. Hinzu zählt vor allem auch, daß die hydraulisch betätigbaren Schaltkupplungen durch Modulation des Betätigungsdrucks derart geschaltet werden, daß eine gesteuerte Lastübernahme vorliegt. Bei bestimmten Fahrzeugen, beispielsweise bei Flurförderfahrzeugen, wie Gabelstaplern oder dergleichen, sind neben dem Reversierbetrieb weitere Betriebszustände von besonderer Bedeutung. Hierzu zählen vor allem das Anfahren, das Inchen und das Bremsen.

Der vorliegenden Erfindung liegt die Aufgabe zugrunde, ein Wendegetriebe zu schaffen, das sich durch einen hohen Bedienungskomfort bei einfacher Bauweise auszeichnet. Dies soll nicht nur für den Reversierbetrieb, sondern auch für die erwähnten übrigen Betriebszustände gelten.

Die der Erfindung zugrunde liegende Aufgabe wird dadurch gelöst, daß jede Schaltkupplung durch Federkraft im Schließsinne und gegen die Federkraft hydraulisch im Öffnungssinne betätigbar ist und daß zur Betätigung der Schaltkupplung ein Wegeventil vorgesehen ist, das in einer Schaltstellung einen Ringraum der Betätigungseinrichtung mit einer Zulaufleitung und in einer weiteren Schaltstellung den Ringraum über eine Rücklaufleitung mit einem Speicher verbindet, aus dem das aus dem Ringraum in den Speicher überführte Druckmittel über eine Blende abfließt. Die zur Richtungsschaltung eingesetzten Schaltkupplungen (Wendekupplungen) werden negativ betätigt, d. h. durch Federkraft geschlossen und hydraulisch geöffnet. Dies ist eine Voraussetzung, um in Verbindung mit einem Speicher eine Modulation der Schaltkupplungen zu ermöglichen, ohne daß hierzu ein zusätzliches Modulationsventil erforderlich wäre. Trotz sehr einfacher Bauweise läßt sich die Lastübernahme durch jeweils eine der Schaltkupplungen durch Druckmodulation steuern. Im Gegensatz zu Sitzventilen entstehen keine Probleme bei unterschiedlichen Viskositäten, da die verwendete Blende relativ viskositätsunabhängig arbeitet. Die Steuerung kann hydraulisch oder elektrohydraulisch erfolgen, was den erforderlichen Aufwand reduziert. Durch den hydrodynamischen Drehmomentwandler ist ein einfaches Anfahren möglich. Der eingesetzte Speicher ist für Wendeschaltungen ausgelegt. Dies bedeutet, daß er das aus dem Ringraum der Betätigungseinrichtung bei Betätigung der Schaltkupplung schlagartig verdrängte Öl fast vollständig aufnimmt. Der anschließende Modulationsvorgang läuft selbsttätig ab, so daß der Fahrer von der Druckmodulation entlastet ist. Die Zeitfunktion zum Schließen einer Schaltkupplung kann durch einfache Variation der Blendenöffnung eingestellt werden. Beim Betätigen der Schaltkupplung wird sehr schnell der Punkt erreicht, ab dem moduliert wird. Mit Proportionalventilen ist dieser Vorteil nicht erzielbar, weil die positive Betätigung einer Schaltkupplung naturgemäß eine gewisse Zeit in Anspruch nimmt, weil die Schaltkupplung zunächst befüllt werden muß. In der einfachsten Form handelt es sich bei dem erfindungsgemäßen Wendegetriebe um ein Getriebe mit einem Vorwärts- und einem Rückwärtsgang, wie es beispielsweise in einem Staplerantrieb verwendet wird. Das Getriebe kann jedoch auch den Eingang eines mehrgängigen lastschaltbaren Wendegetriebes, wie es insbesondere in Baumaschinen, wie zum Beispiel Radladern, Baggerladern usw., eingesetzt wird, bilden.

Es ist vorteilhaft, wenn in die Rücklaufleitung vor dem Speicher und der Blende ein Wegeventil eingeschaltet ist, durch das die Rücklaufleitung bei normalem Betrieb ständig geöffnet ist, während im stromlosen Zustand die Rücklaufleitung zum Einleiten eines Bremsvorgangs mit einem weiteren Speicher verbunden wird. Aus diesem Speicher läuft das Druckmedium über eine weitere Blende ab. Diese Maßnahme ist insbesondere für den Fall einer Notbremsung besonders vorteilhaft. Die Druckmodulation während einer solchen Notbremsung erfolgt somit analog zur Druckmodulation während eines Schaltvorgangs, wenn auch in einem anderen Druck- und Zeitbereich.

Für den Inch-Betrieb ist eine Ausgestaltung vorteilhaft, bei der eine Verbindungsleitung von der Zulaufleitung zur Rücklaufleitung führt. In dieser Verbindungsleitung liegt eine Drossel mit veränderlichem Querschnitt. In vorteilhafter Weise ist diese Drossel über ein Inch-Pedal einstellbar. Durch Betätigen des Inch-Pedals beim Inch-Vorgang wird erreicht, daß eine geschlossene Schaltkupplung mit Druckmittel aus der Zulaufleitung über die Verbindungsleitung und die Rücklaufleitung Gegendruck bekommt. Durch den Aufbau dieses Gegendrucks kann diese Kupplung schlupfen. Hierzu ist kein gesondertes Inch-Ventil erforderlich. Vorteilhaft ist ferner, daß durch diese Anordnung vor der Drossel stets Druckmittel aus der Zulaufleitung ansteht.

Um beim Zuschalten einer Schaltkupplung schnell den Punkt zu erreichen, ab dem eine gesteuerte Lastübernahme erfolgt, ist es sehr vorteilhaft, wenn der Speicher ein Volumen aufweist, das etwa demjenigen Ölvolumen entspricht, das aus dem Ringraum verdrängt wird, bis die Lamellen der Schaltkupplung zur Anlage kommen.

Das erfindungsgemäße Wendegetriebe kann durch Vorgelegewellen und Zahnräder und weiteren Schaltkupplungen zur Gangschaltung sowie einem Abtriebsrädersatz zu einem Mehrganggetriebe ergänzt werden.

Das erfindungsgemäße Wendegetriebe eignet sich insbesondere für den Antrieb eines Flurförderfahrzeugs, zum Beispiel einem Gabelstapler.

Weitere, für die Erfindung wesentliche Merkmale sowie die daraus resultierenden Vorteile sind der nachfolgenden Beschreibung eines Ausführungsbeispiels der Erfindung zu entnehmen.

Es zeigen:
- Fig. 1: ein unter Last schaltbares Wendegetriebe mit einem hydrodynamischen Drehmomentwandler zum Antrieb eines Staplers, gesehen im Längsschnitt und
- Fig. 2: das Schema eines Hydraulikkreislaufs zur Betätigung von Schaltkupplungen des Wendegetriebes nach Fig. 1.

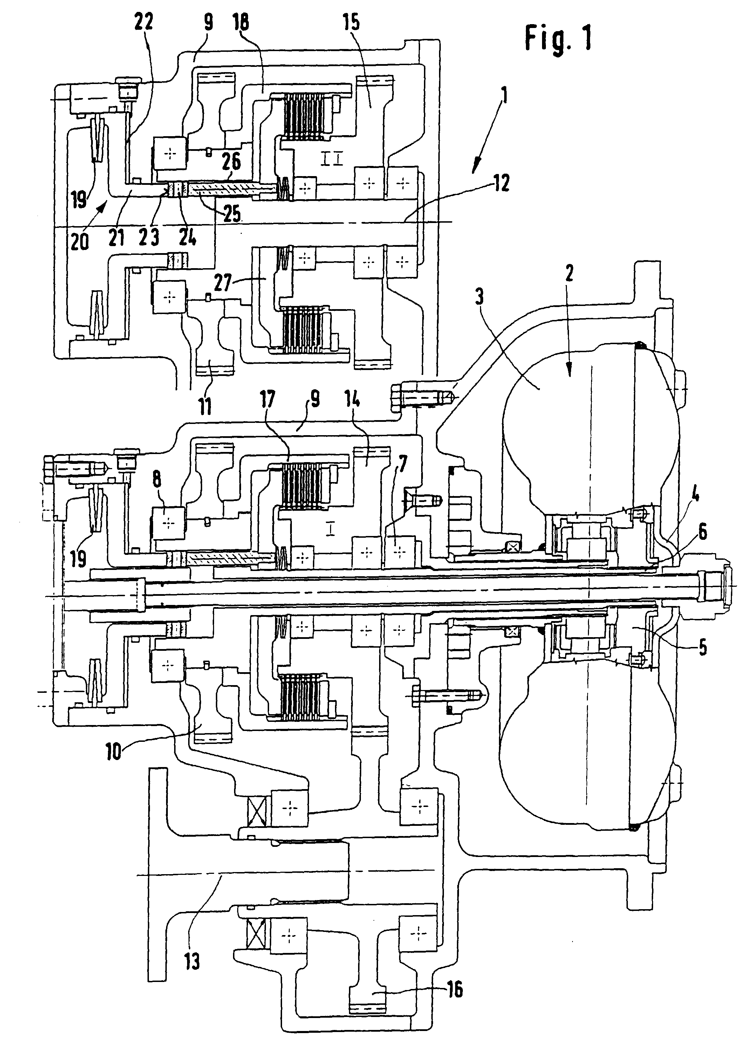

In Fig. 1 ist ein lastschaltbares Wendegetriebe 1 im Längsschnitt dargestellt. Es handelt sich um ein Wendegetriebe mit einem Vorwärts- und einem Rückwärtsgang, insbesondere innerhalb eines Antriebes eines Flurförderfahrzeugs, zum Beispiel eines Staplers. Dem Wendegetriebe 1 ist ein hydrodynamischer Drehmomentwandler 2 vorgeschaltet. Ein Pumpenrad 3, das Bestandteil eines Wandlergehäuses 4 ist, steht mit einem selbst nicht dargestellten Motor in Antriebsverbindung.

Ein Turbinenrad 5 des hydrodynamischen Drehmomentwandlers 2 ist drehfest mit einer als Hohlwelle ausgebildeten Eingangswelle 6 des Wendegetriebes 1 verbunden.

Die Eingangswelle ist über zwei Wälzlager 7 und 8 innerhalb eines Getriebegehäuses 9 drehbar gelagert. Mit der Eingangswelle 6 ist - in der Zeichnung links liegend - ein Festrad 10 drehfest verbunden. Das Festrad 10 steht in ständigem Zahneingriff mit einem weiteren Festrad 11 einer Vorgelegewelle 12. Die Vorgelegewelle 12 ist, der besseren Übersichtlichkeit wegen, in die Zeichnungsebene gedreht. Die Zentren der Eingangswelle, der Vorgelegewelle 12 und einer Abtriebswelle 13 liegen in den Eckpunkten eines Dreiecks, gesehen in Getriebelängsrichtung.

Auf der Eingangswelle 6 und der Vorgelegewelle 12 sind Losräder 14 und 15 drehbar gelagert. Diese Losräder 14 und 15 stehen in ständigem Zahneingriff mit einem Abtriebsrad 16, das drehfest mit der Abtriebswelle 13 verbunden ist.

Den Losrädern 14 und 15 sind Schaltkupplungen 17 und 18 zugeordnet. Bei geschlossener Schaltkupplung 17 ist das Losrad 14 drehfest mit der Eingangswelle 6 verbunden. Die Schaltkupplung 17 dient der Richtungsschaltung für die Fahrtrichtung Vorwärts. Die Antriebsleistung fließt über die geschlossene Schaltkupplung 17 über das Losrad 14 auf das Abtriebsrad 16 und die Abtriebswelle 13.

Zur Fahrtrichtungsumkehr wird die Schaltkupplung 18 (Richtungsschaltung für die Fahrtrichtung Rückwärts) geschlossen, während die Schaltkupplung 17 geöffnet wird. Die Antriebsleistung fließt, ausgehend von der Eingangswelle 6, über die Festräder 10 und 11, die geschlossene Schaltkupplung 18 und über das Losrad 15 auf das Abtriebsrad 16 und die Abtriebswelle 13.

Die Schaltkupplungen sind in an sich üblicher Weise aufgebaut, so daß sich eine nähere Beschreibung an dieser Stelle erübrigt.

Die Schaltkupplungen 17 und 18 sind die Wendekupplungen des Wendegetriebes 1. Sie werden negativ betätigt, d. h. durch die Kraft paarweise zusammenwirkender Tellerfedern 19 geschlossen und hydraulisch geöffnet. Jeder Schaltkupplung 17 und 18 ist eine Betätigungseinrichtung 20 zugeordnet. Diese wird aus folgenden Teilen gebildet: Ein Kolben 21 ist axial beweglich und dichtend im Getriebegehäuse 9 geführt. Der Kolben 21 bildet mit dem Getriebegehäuse 9 einen Ringraum 22, dem Druckmittel zugeführt bzw. aus dem Druckmittel abgeführt werden kann. Eine Stirnfläche 23 des Kolbens 21 liegt an einem Axiallager 24 an. Auf der gegenüberliegenden Seite des Axiallagers liegen mehrere Bolzen 25, von denen einer abgebildet ist, an, die axial verschiebbar in Bohrungen 26 der Eingangs- bzw. Vorgelegewelle 6 bzw. 12 geführt sind. Die Bolzen 25 sind mit einer Druckplatte 27 der Schaltkupplung 17 bzw. 18 fest verbunden. Ist der Ringraum 22 drucklos, wird die Schaltkupplung 17 bzw. 18 durch die Kraft der Tellerfedern 19 über den Kolben 21, das Axiallager 24 und die Bolzen 25 geschlossen. Die Schaltkupplung 17 bzw. 18 wird geöffnet, indem dem Ringraum 22 Druckmittel zugeführt wird. Je nach der Höhe des im Ringraum 22 herrschenden Drucks des Druckmittels kann die Schaltkupplung 17 bzw. 18 auch mehr oder weniger geschlossen bzw. geöffnet sein. In diesen Fällen schlupft die Schaltkupplung 17 bzw. 18.

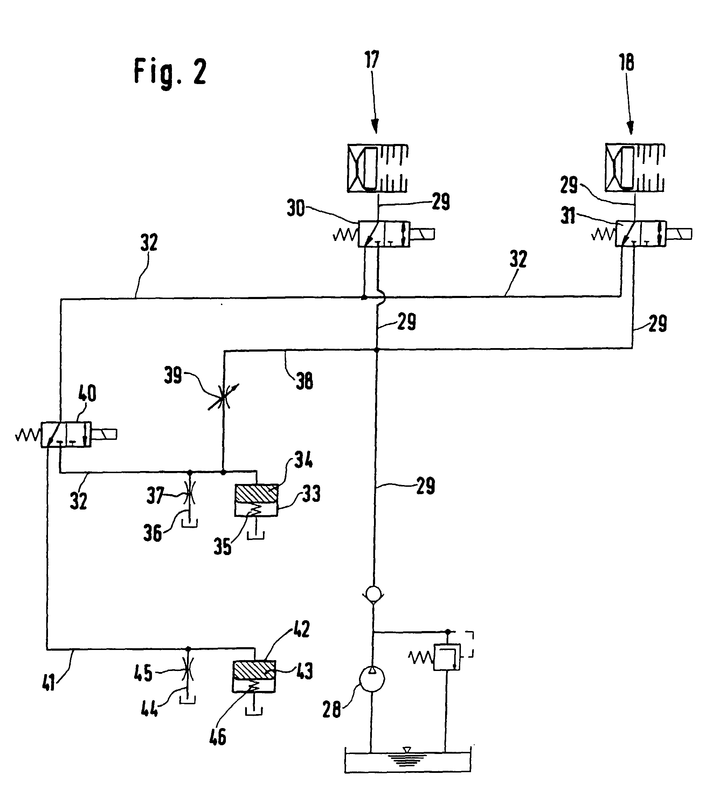

Das Schema eines Hydraulikkreislaufes zur Betätigung der Schaltkupplungen 17 und 18 ist der Fig. 2 zu entnehmen. Eine Pumpe 28 fördert Druckmittel über eine sich verzweigende Zulaufleitung 29 zum Ringraum 22 der Schaltkupplung 17 bzw. 18, unter der Voraussetzung, daß ein elektromagnetisch schaltbares Wegeventil 30 (für die Schaltkupplung 17) oder 31 (für die Schaltkupplung 18) bestromt ist, so daß das jeweils rechtsliegende Feld geschaltet ist. Ist dies nicht der Fall, ist der Ringraum 22 der Schaltkupplung 17 bzw. 18 mit einer Rücklaufleitung 32 verbunden. Die Rücklaufleitung 32 ist an einen Speicher 33 angeschlossen. Im Speicher 33 ist ein Kolben 34, der durch eine Feder 35 belastet ist, beweglich geführt. An die Rücklaufleitung 32 ist eine Leitung 36 angeschlossen, in die eine Blende 37 eingeschaltet ist. Es kann hierbei vorteilhaft sein, die Blende 37 in den Kolben 34 zu integrieren, so daß Blende und Kolben ein gemeinsames Bauteil bilden.

Ferner ist zwischen der Leitung 36 bzw. der Blende 27 und dem Kolben 34 eine Verbindungsleitung 38 angeschlossen, über die eine Verbindung von der Zulaufleitung 29 zur Rücklaufleitung 32 hergestellt ist. In dieser Verbindungsleitung 38 liegt eine Drossel 39 mit veränderlichem Querschnitt.

Beim vorliegenden Ausführungsbeispiel der Erfindung liegt in der Rücklaufleitung 32 ein weiteres Wegeventil 40. Während des normalen Betriebes ist dieses Wegeventil 40 bestromt, so daß das in der Zeichnung rechts liegende Feld geschaltet ist. In stromlosem Zustand, zum Beispiel bei Stromausfall, nimmt das Wegeventil 40 seine in der Zeichnung abgebildete Schaltposition ein. In diesem Fall ist die Rücklaufleitung 32 über eine zusätzliche Leitung 41 mit einem weiteren Speicher 42 verbunden. In diesem Speicher 42 ist ebenfalls ein federbelasteter (Feder 46) Kolben 43 beweglich geführt. Eine Leitung 44 führt von der Leitung 41 zum Tank. In diese Leitung 44 ist eine weitere Blende 45 eingeschaltet. Auch hier kann die Blende 45 im Kolben 43 integriert sein, so daß ein gemeinsames Bauteil gebildet wird.

### Fahrtrichtung Vorwärts:

Für die Fahrtrichtung Vorwärts ist die Schaltkupplung 17 geschlossen, während die Schaltkupplung 18 geöffnet ist. Das Wegeventil 30 ist, wie in Fig. 2 abgebildet, geschaltet, während das rechts liegende Feld des Wegeventils 31 geschaltet ist. Das Wegeventil 40 ist bestromt, so daß über die Rücklaufleitung 32 eine Verbindung zum Speicher 33 besteht.

### Schaltung Vorwärts-Rückwärts:

Das Wegeventil 30 wird bestromt, während das Wegeventil 31 seine in der Zeichnung abgebildete Stellung einnimmt. Die Schaltkupplung 17 wird hydraulisch geöffnet. Das im Ringraum 22 der Schaltkupplung 18 eingeschlossene Druckmittel wird praktisch verzögerungsfrei fast vollständig (ca. 90 %) über die Rücklaufleitung 32 in den Speicher 33 überführt. Bei diesem Vorgang bewegt sich der Kolben 34 gegen die Kraft der Feder 35 nach unten - bezogen auf die Zeichnung. Die Schaltkupplung 18 hat sich zu diesem Zeitpunkt bereits so weit geschlossen, daß die Kupplungslamellen in gegenseitige Anlage kommen. Von diesem Punkt ab erfolgt die Lastübernahme durch die Schaltkupplung 18 druckmoduliert. Die gesteuerte Lastübernahme durch die Schaltkupplung 18 bis zu deren vollständigem Schließen erfolgt zeitabhängig in der Weise, daß das aus dem Ringraum 22 in den Speicher 33 überführte Druckmittel über die Blende 37 und die Leitung 36 in den Tank abfließt. Das Druckniveau bei der erläuterten Druckmodulation läßt sich durch eine geeignete Auslegung der Feder 35 leicht anpassen bzw. variieren. Durch die Blende wird der Zeitraum vorgegeben, in dem die Druckmodulation abläuft. Für die Druckmodulation ist kein zusätzliches Modulationsventil erforderlich. Die verwendete Blende 37 ist relativ viskositätsunabhängig, was, verglichen mit Sitzventilen, von besonderem Vorteil ist.

Bei geschalteter Fahrtrichtung Rückwärts ist die Schaltkupplung 17 geöffnet, während die Schaltkupplung 18 geschlossen ist. Die Leistung wird von der Eingangswelle 6 über die miteinander kämmenden Festräder 10 und 11 auf das angekuppelte Losrad 15 übertragen. Das Losrad 15 kämmt mit dem Abtriebsrad 16 der Abtriebswelle.

### Inch-Betrieb:

Bei angenommener Fahrtrichtung Vorwärts ist die Schaltkupplung 17 durch die Kraft der Tellerfedern 19 geschlossen. Zum Inchen muß im Ringraum 22 ein Druck aufgebaut werden, damit die Kupplung schlupfen kann, d. h., die auf das Lamellenpaket wirkende resultierende Kraft wird verringert. Zum Aufbau dieses Gegendrucks ist kein separates Inch-Ventil erforderlich. Die Inch-Einrichtung besteht aus der Drossel 39 mit veränderlichem Querschnitt. Der Querschnitt kann durch ein selbst nicht dargestelltes Inch-Pedal eingestellt werden. Durch Betätigen des Inch-Pedals wird über die Verbindungsleitung 38 eine Ölmenge aus der Zulaufleitung 29 dosiert in die Rücklaufleitung 32 gegeben. Hiermit ist es zum einen möglich, den erforderlichen Gegendruck in der Schaltkupplung 17 aufzubauen und zum anderen kann das Druckmittel über die Blende 37 zum Tank abfließen. Diejenige Druckmittelmenge, die nicht unverzögert abfließt, wird durch den Speicher 34 aufgenommen.

Während des Inch-Betriebs kann ohne weiteres das Gaspedal betätigt werden. Dies ist beispielsweise erforderlich, wenn über die Arbeitshydraulik eine Last angehoben werden soll. Über das Inch-Pedal kann "Kriechen" geschaltet werden.

### Haltebremsfunktion:

Sind beide Wegeventile 30 und 31 stromlos, sind beide Schaltkupplungen 17 und 18 geschlossen, so daß das Getriebe somit verblockt ist. Grundsätzlich ist demnach keine zusätzliche Haltebremse notwendig, obwohl eine solche, wenn sie aus besonderen Gründen gefordert wird, gegebenenfalls vorhanden sein kann.

### Notbremsung:

Ist die Betriebsbremse außer Funktion, muß das Fahrzeug über die Haltebremse abgebremst werden können. Hierzu werden alle Wegeventile 30, 31 und 40 stromlos geschaltet. Sie nehmen dann die in der Zeichnung abgebildete Schaltposition ein. Die zuvor befüllte Schaltkupplung 17 oder 18 verdrängt das im Ringraum 22 eingeschlossene Druckmittel in den Speicher 42. Durch die Feder 46 stellt sich ein Gegendruck im Ringraum der Schaltkupplung ein, so daß eine entsprechende Abbremsung des Fahrzeugs erfolgt. Das in den Speicher 42 überführte Druckmittel fließt nunmehr stetig über die Blende 45 ab. Die Blende 45 ist so bemessen, daß sich der Speicher 42 erst entleert hat, wenn das Fahrzeug zum Stillstand gekommen ist. Solange das Fahrzeug rollt, darf der Speicher 42 demnach nicht entleert sein.

Der vorstehend erläuterte Bremsvorgang durch Aufbau eines Gegendrucks in der Schaltkupplung stellt sicher, daß keine unzulässig hohen Verzögerungswerte auftreten. Da die Schaltkupplungen so ausgelegt sind, daß sie das volle Antriebsmoment übertragen können, würden ohne diesen Gegendruck unzulässig hohe Verzögerungswerte erreicht.

### Bezugszeichen

- 1: Wendegetriebe
- 2: Drehmomentwandler
- 3: Pumpenrad
- 4: Wandlergehäuse
- 5: Turbinenrad
- 6: Eingangswelle
- 7: Wälzlager
- 8: Wälzlager
- 9: Getriebegehäuse
- 10: Festrad
- 11: Festrad
- 12: Vorgelegewelle
- 13: Abtriebswelle
- 14: Losrad
- 15: Losrad
- 16: Abtriebsrad
- 17: Schaltkupplung
- 18: Schaltkupplung
- 19: Tellerfeder
- 20: Betätigungseinrichtung
- 21: Kolben
- 22: Ringraum
- 23: Stirnfläche
- 24: Axiallager
- 25: Bolzen
- 26: Bohrung
- 27: Druckplatte
- 28: Pumpe
- 29: Zulaufleitung
- 30: Wegeventil
- 31: Wegeventil
- 32: Rücklaufleitung
- 33: Speicher
- 34: Kolben
- 35: Feder
- 36: Leitung
- 37: Blende
- 38: Verbindungsleitung
- 39: Drossel
- 40: Wegeventil
- 41: Leitung
- 42: Speicher
- 43: Kolben
- 44: Leitung
- 45: Blende
- 46: Feder

## Patentansprüche

1. Unter Last schaltbares Wendegetriebe (1) mit einem hydrodynamischen Drehmomentwandler (2), einer Ein- und Ausgangswelle (6, 13), mindestens einer Vorgelegewelle (12) und Zahnrädern (10, 11, 14, 15), die einen Wendesatz bilden, sowie Schaltkupplungen (17, 18) mit Losrädern (14, 15), die Betätigungseinrichtungen (20) aufweisen und zur Richtungsschaltung wahlweise drehfest mit der Eingangs- oder Vorgelegewelle verbindbar sind, dadurch **gekennzeichnet**, daß jede Schaltkupplung (17, 18) durch Federkraft im Schließsinne und gegen die Federkraft hydraulisch im Öffnungssinne betätigbar ist und daß zur Betätigung der Schaltkupplung (17 bzw. 18) ein Wegeventil (30 bzw. 31) vorgesehen ist, das in einer Schaltstellung einen Ringraum (22) der Betätigungseinrichtung (20) mit einer Zulaufleitung (29) verbindet und in einer weiteren Schaltstellung den Ringraum (22) über eine Rücklaufleitung (32) mit einem Speicher (33) verbindet, aus dem das aus dem Ringraum in den Speicher überführte Druckmittel über eine Blende (37) abfließt.

2. Wendegetriebe nach Anspruch 1, dadurch **gekennzeichnet**, daß in die Rücklaufleitung (32) vor dem Speicher (33) und der Blende (37) ein Wegeventil (40) eingeschaltet ist, das während des normalen Betriebs die Rücklaufleitung ständig offenhält und im stromlosen Zustand die Rücklaufleitung zum Einleiten eines Bremsvorgangs mit einem weiteren Speicher (42) verbindet, aus dem das Druckmedium über eine weitere Blende (45) abläuft.

3. Wendegetriebe nach den Ansprüchen 1 und 2, dadurch **gekennzeichnet**, daß an die Rücklaufleitung (32) durch eine Verbindungsleitung (38), in der eine Drossel (39) mit veränderlichem Querschnitt liegt, die Zulaufleitung (29) angeschlossen ist, so daß im Ringraum (22) der Schaltkupplung (17 bzw. 18) ein Gegendruck zur Kraft der Tellerfedern (19) aufgebaut werden kann.

4. Wendegetriebe nach Anspruch 3, dadurch **gekennzeichnet**, daß die Drossel (39) über ein Inch-Pedal einstellbar ist.

5. Wendegetriebe nach Anspruch 1, dadurch **gekennzeichnet**, daß der Speicher (33) ein Volumen aufweist, das etwa demjenigen Ölvolumen entspricht, das aus dem Ringraum (22) verdrängt wird, bis die Lamellen der Schaltkupplung (17 bzw. 18) zur Anlage kommen.

6. Wendegetriebe nach Anspruch 1, dadurch **gekennzeichnet**, daß es durch Vorgelegewellen und Zahnräder und weiteren Schaltkupplungen zur Gangschaltung sowie einem Abtriebsrädersatz zu einem Mehrganggetriebe ergänzt ist.

7. Wendegetriebe nach Anspruch 1, **gekennzeichnet** durch die Verwendung bei einem Flurförderfahrzeug, insbesondere Gabelstapler.

## Claims

1. Change-under-load reversing gear (1) with a hydrodynamic torque converter (2), an input and an output shaft (6, 13), at least one countershaft (12) and gear wheels (10, 11, 14, 15), which form a reversing set, as well as clutches (17, 18) with idler wheels (14, 15), which comprise actuating devices (20) and can be connected in a torsion-proof manner either to the input shaft or to the countershaft in order to change direction, characterised in that each clutch (17, 18) can be actuated by spring force in the closing direction and against the spring force hydraulically in the opening direction, and that a directional valve (30 and 31, respectively,) is provided to actuate the clutch (17 and 18, respectively,), which valve connects an annular space (22) of the actuating device (20) to a feed line (29) in one switched position and the annular space (22) to a reservoir (33) via a return line (32) in another switched position, out of which reservoir the pressure medium transferred to the latter from the annular space flows off via an orifice (37).

2. Reversing gear according to claim 1, characterised in that a directional valve (40) is connected into the return line (32) before the reservoir (33) and the orifice (37), which valve constantly keeps the return line open during normal operation and connects the return line to a further reservoir (42) in the absence of flow to initiate a braking action, out of which reservoir the pressure medium runs off via a further orifice (45).

3. Reversing gear according to claims 1 and 2, characterised in that the feed line (29) is connected to the return line (32) by a connecting line (38), in which a throttle (39) with a variable cross section is located, so that a counterpressure to the force of the Belleville springs (19) can be built up in the annular space (22) of the clutch (17 and 18, respectively).

4. Reversing gear according to claim 3, characterised in that the throttle (39) can be adjusted via an inching pedal.

5. Reversing gear according to claim 1, characterised in that the reservoir (33) has a volume which corresponds approximately to the oil volume which is displaced from the annular space (22) until the plates of the clutch (17 and 18, respectively) come into contact.

6. Reversing gear according to claim 1, characterised in that it is completed by countershafts and gear wheels and further clutches for changing speed as well as a driven wheel set to form a multispeed gear.

7. Reversing gear according to claim 1, characterised by its use in an industrial vehicle, in particular a fork stacker.

## Revendications

1. Transmission réversible (1) manoeuvrable en charge comportant un transformateur de couple hydrodynamique (2), un arbre d'entrée et un arbre de sortie (6, 13), au moins un arbre intermédiaire (12) et des roues dentées (10, 11, 14, 15) formant un ensemble d'inversion, ainsi que des embrayages (17, 18) avec des roues mobiles (14, 15) comportant des dispositifs de commande (20) et pouvant être reliées de façon non rotative pour la commande de la direction, sélectivement avec l'arbre d'entrée ou l'arbre intermédiaire, **caractérisée** en ce que chaque embrayage (17, 18) peut être actionné par la force de ressort dans le sens de la fermeture et hydrauliquement contre la force de ressort, dans le sens de l'ouverture, et en ce que pour l'actionnement de l'embrayage (17, respectivement 18), est prévu un distributeur (30, respectivement 31) qui relie, dans une position de commande, un espace annulaire (22) du dispositif de commande (20) à une conduite d'alimentation (29) et, dans une autre position de commande, relie l'espace annulaire (22) au moyen d'une conduite de retour (32), à un réservoir (33) duquel s'écoule, par un écran (37), le fluide sous pression transféré de l'espace annulaire dans le réservoir.

2. Transmission réversible selon la revendication 1, **caractérisée** en ce que dans la conduite de retour (32), avant le réservoir (33) et l'écran (37), est intercalé un distributeur (40) qui, en fonctionnement normal, maintient ouverte en permanence la conduite de retour et, dans l'état sans courant, relie la conduite de retour pour la mise en oeuvre d'un processus de freinage à un autre réservoir (42) duquel s'écoule le fluide sous pression par un autre écran (45).

3. Transmission réversible selon les revendications 1 et 2, **caractérisée** en ce que par une conduite de jonction (38) dans laquelle se trouve une soupape d'étranglement (39) à section variable, la conduite d'alimentation (29) est reliée à la conduite de retour (32) permettant d'établir dans l'espace annulaire (22) de l'embrayage (17, respectivement 18), une contre-pression par rapport a la force des ressorts à disques (19).

4. Transmission réversible selon la revendication 3, **caractérisée** en ce que la soupape d'étranglement (39) est réglable au moyen d'une pédale pour le fonctionnement par pas.

5. Transmission réversible selon la revendication 1, **caractérisée** en ce que le réservoir (33) présente un volume qui correspond à peu près au volume d'huile qui est refoulé de l'espace annulaire (22) avant que les disques de l'embrayage (17, respectivement 18) entrent en contact.

6. Transmission réversible selon la revendication 1, **caractérisée** en ce qu'elle est complétée par des arbres intermédiaires et des roues dentées et d'autres embrayages pour passer les vitesses, ainsi que par un jeu de roues de sortie pour former une boîte à plusieurs vitesses.

7. Transmission réversible selon la revendication 1, **caractérisée** par son utilisation dans un chariot de manutention, notamment un chariot élévateur à fourche.
